Europäisches Patentamt

European Patent Office

Office européen des brevets

(19)

(11) Veröffentlichungsnummer : **0 067 306
B1**

(12) **EUROPÄISCHE PATENTSCHRIFT**

(45) Veröffentlichungstag der Patentschrift :
09.10.85

(21) Anmeldenummer : 82104010.2

(22) Anmeldetag : 08.05.82

(51) Int. Cl.⁴ : **A 62 C   3/14, F 16 K 17/38**

(54) **Feuerschutz-Absperrvorrichtung für Lüftungskanäle.**

(30) Priorität : 13.06.81 DE 3123555

(43) Veröffentlichungstag der Anmeldung :
22.12.82 Patentblatt 82/51

(45) Bekanntmachung des Hinweises auf die Patenterteilung : 09.10.85 Patentblatt 85/41

(84) Benannte Vertragsstaaten :
BE CH FR GB LI SE

(56) Entgegenhaltungen :
FR-A- 2 286 351
US-A- 2 766 859
US-A- 2 825 275
US-A- 3 076 469
US-A- 4 146 048

(73) Patentinhaber : Strulik, Wilhelm Paul
2, Rue d'Heurtebise Roussemeau
Villeneuve-sur-Yonne (Yonne) (FR)

Eidmann, Jürgen
Feldbergstrasse 9
D-6384 Schmitten 3 (DE)

(72) Erfinder : Strulik, Wilhelm Paul
2, Rue d'Heurtebise Roussemeau
Villeneuve-sur-Yonne (Yonne) (FR)
Erfinder : Eidmann, Jürgen
Feldbergstrasse 9
D-6384 Schmitten 3 (DE)

(74) Vertreter : Andrejewski, Walter et al
Patentanwälte Andrejewski, Honke & Partner Postfach 10 02 54 Theaterplatz 3
D-4300 Essen 1 (DE)

EP 0 067 306 B1

## Beschreibung

Die Erfindung betrifft eine Feuerschutz-Absperrvorrichtung für Lüftungskanäle, bestehend aus einem Einbaustutzen und zwei in dem Einbaustutzen schwenkbar gelargerten Flügelklappen, welche mittels eines Schmelzlots unter Federspannung in Offenstellung gehalten sind und nach dem Bersten des Schmelzlots bei vorgegebener Temperatur in Schließstellung schnellen und den Stutzenquerschnitt absperren, wobei die beiden Flügelklappen auf getrennten außermittig angeordneten Schwenkachsen unter Bildung eines freien Zwischenraumes in der Stutzenmitte in Offenstellung gehalten sind.

Es ist eine derartige Feuerschutz-Absperrvorrichtung bekannt, bei welcher sich die Lagerachse für die beiden Flügelklappen über den gesamten Stutzenquerschnitt erstreckt. Die Flügelklappen sind gleichsam scharnierartig an die Lagerachse angeschlossen und im übrigen mittels einer auf der Lagerachse angeordneten Torsionsfeder in Schließrichtung beaufschlagt. Diese Torsionsfeder ist also nicht an der Stutzeninnenwand befestigt. Eine derartige Lagerung ist in strömungstechnischer Hinsicht nachteilig. Das gilt auch unter Berücksichtigung der bei der bekannten Ausführungsform verwirklichten Torsionsfeder, weil diese sich wie die Lagerachse im Strömungsquerschnitt zwischen beiden Flügelklappen befindet (vgl. FR-A-22 86 351).

Die gleichen strömungstechnischen Nachteile treten bei einer anderen bekannten Konstruktion auf. In diesem Fall wird auf das Lagerprofil für die Flügelklappen verwiesen. Auch hier stört in strömungstechnischer Hinsicht eine bügelartige Zugfeder, welche die beiden Flügelklappen bzw. deren Lagerung in Offenstellung untergreift (vgl. US-A-41 46 048).

Bei einer anderen bekannten Feuerschutz-Absperrvorrichtung erstreckt sich die Lagerachse mit Scharnierabschnitten für die Flügelklappen über den gesamten Querschnitt des Einbaustutzens und stört daher in strömungstechnischer Hinsicht. Das gilt ebenso für die die Flügelklappen umfassende Schließfeder (vgl. US-A-30 76 469).

Der Erfindung liegt die Aufgabe zugrunde, eine Feuerschutz-Absperrvorrichtung für Lüftungskanäle der eingangs beschriebenen Art zu schaffen, die sich durch reduzierte Druckverluste auszeichnet.

Diese Aufgabe löst die Erfindung bei einer gattungsgemäßen Feuerschutz-Absperrvorrichtung dadurch, daß die beiden Flügelklappen an den Enden ihrer in Schließstellung eine Mittellinie bildenden Stoßkanten abgewinkelte Lagerschenkel mit außermittigen Lagerbohrungen aufweisen und an der Stutzeninnenwand Lagerwangen mit außermittigen in die Lagerbohrungen eingreifenden Lagerzapfen angeordnet sind, und daß die in Offenstellung gehaltenen Flügelklappen mittels jeweils einer an der Stutzeninnenwand befestigten Druckfeder beaufschlagt sind, wobei die Lagerschenkel exzentrische Montagebohrungen für die als Bügelfedern ausgebildeten Druckfedern aufweisen, deren jeweils eines Bügelende an der Stutzeninnenwand und deren jeweils anderes Bügelende in der betreffenden Montagebohrung befestigt ist. Nach Lehre der Erfindung wird darauf verzichtet, die beiden Schwenkachsen durch den gesamten Strömungsquerschnitt des Einbaustutzens verlaufen zu lassen, vielmehr genügt eine innenwandseitige Lagerung der beiden Flügelklappen, so daß der Strömungsquerschnitt zur Reduzierung von Druckverlusten achsenfrei bleibt. Eine weitere Reduzierung der Druckverluste wird dadurch erreicht, daß sich auch die Druckfedern durch reduzierten Strömungswiderstand auszeichnet. Die Lagerwangen können in einfacher Weise auf den Rand des Einbaustutzens aufgeklemmt sein. Die Bügelfedern sind vorzugsweise einseitig an der Stutzeninnenwand befestigt, wobei zwei für jeweils eine Flügelklappe vorgesehene Bügelfedern als einteiliger Doppelbügel ausgebildet sind.

Die durch die Erfindung erreichten Vorteile sind im wesentlichen darin zu sehen, daß eine Feuerschutz-Absperrvorrichtung für Lüftungskanäle verwirklicht wird, die sich durch reduzierte Druckverluste auszeichnet. Reduzierte Druckverluste werden erreicht weil zunächst einmal darauf verzichtet wird, die Lagerachse für die beiden Flügelklappen durch den gesamten Strömungsquerschnitt des Einbaustutzens verlaufen zu lassen. Vielmehr genügt nach Lehre der Erfindung eine innenwandseitige Lagerung der beiden Flügelklappen, so daß der Strömungsquerschnitt zur Reduzierung der Druckverluste frei bleibt. Eine weitere Reduzierung der Druckverluste wird durch die Lagerung der als Bügelfedern ausgebildeten Druckfedern für die Flügelklappen erreicht. Denn diese Lagerung an einerseits den Flügelklappen und andererseits der Stutzeninnenwand führt zu einer weiteren Reduzierung des Strömungswiderstandes. Dabei können zwei für jeweils eine Flügelklappe vorgesehene Bügelfedern als einteiliger Doppelbügel ausgebildet sein.

Im folgenden wird die Erfindung anhand einer lediglich ein Ausführungsbeispiel darstellenden Zeichnung näher erläutert ; es zeigen :

Figur 1 eine erfindungsgemäße Feuerschutz-Absperrvorrichtung in stirnseitiger Offenstellung,

Figur 2 den Gegenstand nach Fig. 1 in stirnseitiger Schließstellung und

Figur 3 einen Axialschnitt durch den Gegenstand nach Fig. 1.

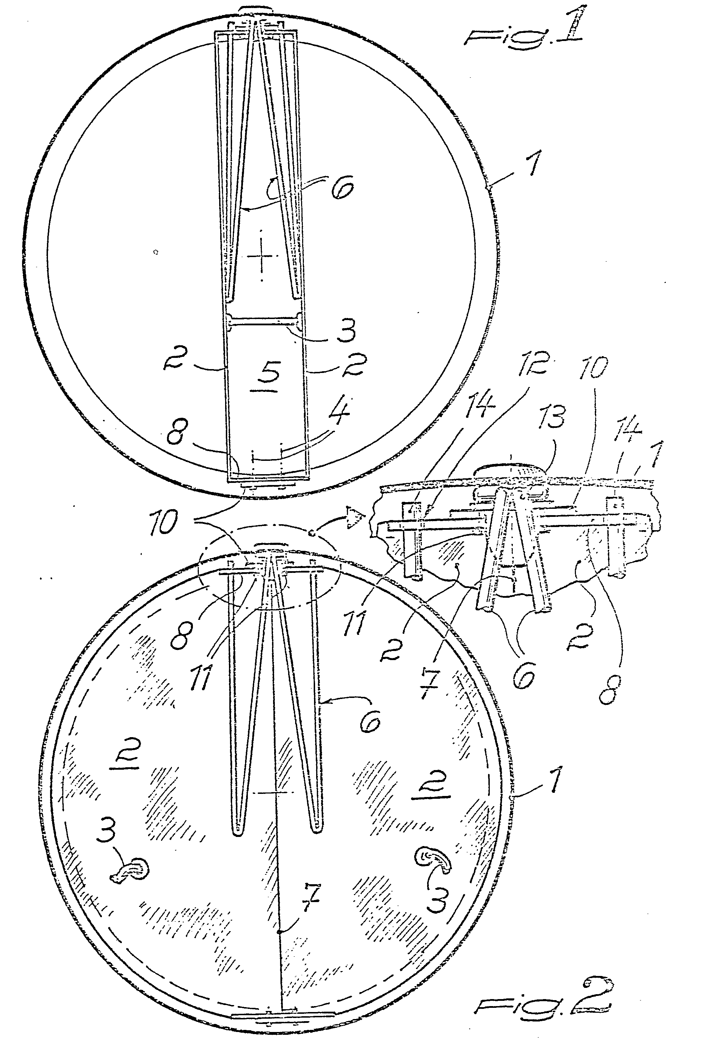

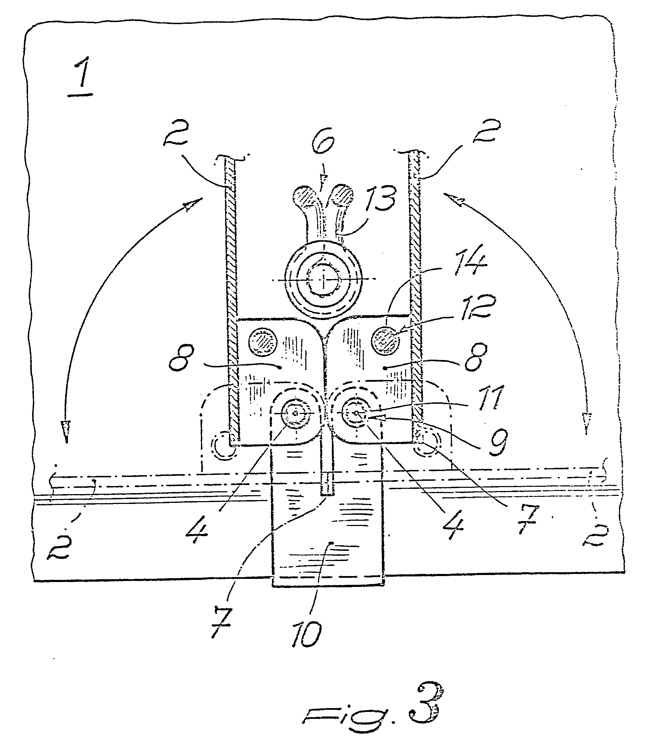

In den Figuren ist eine Feuerschutz-Absperrvorrichtung für Lüftungskanäle dargestellt, die in ihrem grundsätzlichen Aufbau aus einem Einbaustutzen 1 und zwei in dem Einbaustutzen schwenkbar gelagerten Flügelklappen 2 besteht, welche mittels eines Schmelzlotes 3 unter Federspannung in Offenstellung gehalten sind und nach dem Bersten des Schmelzlotes 3 bei vorgegebener Temperatur in Schließstellung schnellen und den Stutzenquerschnitt absperren. Die beiden Flügelklappen 2 sind auf getrennten aussermittig angeordneten Schwenkachsen 4 unter Bildung eines freien Zwischenraumes 5 in der Stutzenmitte in Offenstellung gehalten und jeweils mittels einer an der Stutzeninnenwand befestigten Druckfeder 6 beaufschlagt. Dazu weisen die beiden Flügelklappen 2 an den Enden ihrer in Schließstellung eine Mittellinie bildenden Stoßkanten 7 abgewinkelte Lagerschenkel 8 mit außermittigen Lagerbohrungen 9 auf. An der Stutzeninnenwand sind Lagerwangen 10 mit außermittigen in die Lagerbohrungen 9 eingreifenden Lagerzapfen 11 angeordnet. Die Lagerschenkel 8 weisen exzentrische Montagebohrungen 12 für die als Bügelfedern 6 ausgebildeten Druckfedern auf, deren jeweils eines Bügelende 13 an der Stutzeninnenwand und deren jeweils anderes Bügelende 14 in der betreffenden Montagebohrung 12 befestigt ist. Die Lagerwangen 10 können auf den Rand des Einbaustutzens 1 aufgeklemmt, aber auch angeschweißt sein. Die Bügelfedern 6 sind lediglich einseitig an der Stutzeninnenwand befestigt. Zwei für jeweils eine Flügelklappe 2 vorgesehene Bügelfedern 6 sind als einteiliger Doppelbügel ausgebildet. Grundsätzlich können auch zwei Doppelbügel an gegenüberliegenden Seiten der Stutzeninnenwand befestigt sein.

**Patentansprüche**

1. Feuerschutz-Absperrvorrichtung für Lüftungskanäle, bestehend aus einem Einbaustutzen (1) und zwei in dem Einbaustutzen (1) schwenkbar gelagerten Flügelklappen (2), welche mittels eines Schmelzlots (3) unter Federspannung in Offenstellung gehalten sind und nach dem Bersten des Schmelzlots (3) bei vorgegebener Temperatur in Schließstellung schnellen und den Stutzenquerschnitt absperren, wobei die beiden Flügelklappen (2) auf getrennten außermittig angeordneten Schwenkachsen (4) unter Bildung eines freien Zwischenraumes (5) in der Stutzenmitte in Offenstellung gehalten sind, dadurch gekennzeichnet, daß die beiden Flügelklappen (2) an den Enden ihrer in Schließstellung eine Mittellinie bildenden Stoßkanten (7) abgewinkelte Lagerschenkel (8) mit außermittigen Lagerbohrungen (9) aufweisen und an der Stutzeninnenwand Lagerwangen (10) mit außermittigen in die Lagerbohrungen (9) eingreifenden Lagerzapfen (11) angeordnet sind, und daß die in Offenstellung gehaltenen Flügelklappen (2) mittels jeweils einer an der Stutzeninnenwand befestigten Druckfeder (6) beaufschlagt sind, wobei die Lagerschenkel (8) exzentrische Montagebohrungen (12) für die als Bügelfedern (6) ausgebildeten Druckfedern aufweisen, deren jeweils eines Bügelende (13) an der Stutzeninnenwand und deren anderes Bügelende (14) in der betreffenden Montagebohrung (12) befestigt ist.

2. Feuerschutz-Absperrventil nach Anspruch 1, dadurch gekennzeichnet, daß die Lagerwangen (10) auf den Rand des Einbaustutzens (1) aufgeklemmt sind.

3. Feuerschutz-Absperrvorrichtung nach Anspruch 1 oder 2, dadurch gekennzeichnet, daß die Bügelfedern (6) einseitig an der Stutzeninnenwand befestigt und zwei für jeweils eine Flügelklappe (2) vorgesehene Bügelfedern als einteiliger Doppelbügel ausgebildet sind.

**Claims**

1. A fire-protection sealing-off device for ventilation ducts, consisting of a mounting connecting piece (1) and two wing flaps (2), mounted on hinges in the mounting connecting piece (1), which wing flaps (2) are retained in the open position by means of a fusible link (3) under spring tension and after the rupture of the fusible link (3) at a specified temperature fly back into the closed position and seal off the cross-section of the connecting piece, the two wing flaps (2) being held in the open position on separate hinged axes (4), located off-centre, and forming a clear interspace (5) in the centre of the connecting piece, characterized in that at the ends of their abutting edges (7) which in the closed position form a central line, the two wing flaps (2) possess bent bearing lugs (8) whith off-centre bearing holes (9), and bearing cheeks (10) with trunnions (11) fitting off-centre into the bearing holes (9) are located on the inside wall of the connecting piece, each of the wing flaps (2), when held in the open position, being acted upon by a compression spring (6) fastened to the inner wall of the connecting piece and the bearing lugs (8) possessing eccentric assembly holes (12) for the compression springs which are designed as bow-shaped springs (6), each of which has one bow end (13) fastened to the inside wall of the connecting piece and the other bow end (14) fastened into the assembly hole (12) involved.

2. A fire-protection sealing-off device according to Claim 1, characterized in that the bearing cheeks (10) are clamped against the edge of the mounting connecting piece.

3. A fire-protection sealing-off device according to Claim 1 or Claim 2, characterized in that the bow-shaped springs (6) are fastened at one end to the inner wall of the connecting piece, and two bow-shaped springs provided for each wing flap (2) are formed as a one-piece double bow.

**Revendications**

1. Dispositif d'arrêt pare-feu pour des conduits d'aération, constitué par une tubulure d'insertion (1) et par deux volets en forme d'ailes (2) montés pivotants dans la tubulure d'insertion (1) et qui sont maintenus au moyen d'une soudure (3) apte à fondre, sous la tension d'un ressort, dans la position ouverte et viennent brusquement dans la position fermée après la rupture de la soudure apte à fondre (3), pour une température prédéterminée, et obture la section transversale de la tubulure, les deux clapets en forme d'ailes (2) étant maintenus sur des axes de pivotement (4) séparés et décentrés, de manière à former un espace intercalaire libre (5) au milieu de la tubulure, lorsqu'ils sont ouverts, caractérisé en ce que les deux volets en forme d'ailes (2) comportent, au niveau des extrémités de leurs rebords (7) formant une ligne centrale dans la position fermée, des branches de support coudées (8) comportant des perçages décentrés de support (9), et que des flasques de soutien (10) sont montés sur la paroi intérieure de la tubulure au moyen de tourillons (11) décentrés s'engageant dans les perçages de support (9), et que les volets en forme d'ailes (2) maintenus dans la position ouverte sont chargés à l'aide de ressorts de pression respectifs (6) fixés sur la paroi intérieure de la tubulure, les branches de support (8) comportant des perçages excentrés de montage (12) pour les ressorts de pression réalisés sous la forme d'étriers-ressorts (6) et dont respectivement une extrémité (13) est fixée sur la paroi intérieure de la tubulure tandis que l'autre extrémité (14) de l'étrier est fixée dans le perçage correspondant de montage (12).

2. Dispositif d'arrêt pare-feu selon la revendication 1, caractérisé en ce que les flasques de soutien (10) sont fixés par blocage sur le bord de la tubulure d'insertion (1).

3. Dispositif de blocage pare-feu selon l'une des revendications 1 ou 2, caractérisé en ce que les étriers-ressorts (6) sont fixés, sur un côté, à la paroi intérieure de la tubulure et que deux étriers-ressorts prévus respectivement pour un volet en forme d'aile (2) sont réalisés sous la forme d'un étrier double d'un seul tenant.

Fig.1

Fig.2

Fig. 3